# EUROPÄISCHE PATENTSCHRIFT

(11) **EP 3 910 297 B1**
(45) Veröffentlichungstag und Bekanntmachung des Hinweises auf die Patenterteilung: **23.08.2023**
(21) Anmeldenummer: 21172170.9
(22) Anmeldetag: 04.05.2021
(51) Int. Cl.: G01F 1/66, G01F 1/667, G01N 29/02, B06B 1/06, G10K 11/24, G01N 29/04, G01N 29/24, G01N 29/34, G10K 9/122, G01P 5/24

(54) **VERFAHREN ZUR MODENSELEKTIVEN ANREGUNG EINER GEFÜHRTEN WELLE UND MESSEINRICHTUNG**
METHOD FOR MODE-SELECTIVE EXCITATION OF A GUIDED WAVE AND MEASURING DEVICE
PROCÉDÉ D'EXCITATION SÉLECTIVE DE MODE D'UNE ONDE GUIDÉE ET DISPOSITIF DE MESURE

(30) Priorität: 12.05.2020 DE 102020002835
(43) Veröffentlichungstag der Anmeldung: 17.11.2021
(73) Patentinhaber: Diehl Metering GmbH, 91522 Ansbach (DE)
(72) Erfinder: Mayle, Michael, 91522 Ansbach (DE); Benkert, Andreas, 91522 Ansbach (DE)
(74) Vertreter: Diehl Patentabteilung

(56) Entgegenhaltungen:
- EP-A1- 1 954 413
- WO-A1-98/19296
- US-A- 4 838 127
- US-A1- 2009 016 555
- US-A1- 2016 320 219

## Beschreibung

Die Erfindung betrifft ein Verfahren zur modenselektiven Anregung einer geführten Welle in einem plattenförmigen Wellenleiter, deren Ausbreitungsrichtung parallel zu einer Oberfläche des Wellenleiters verläuft, durch ein mit dem Wellenleiter gekoppeltes, insbesondere piezoelektrisches, Schwingelement, das durch eine Steuereinrichtung zu Schwingungen angeregt wird. Daneben betrifft die Erfindung eine Messeinrichtung.

Die Einkopplung geführter Wellen, insbesondere von Rayleigh- oder Lamb-Wellen in plattenförmige Wellenleiter kann für vielfältige Messaufgaben genutzt werden. Hierbei kann die geführte Welle selbst oder eine durch diese ausgelöste weitere Welle durch das gleiche Schwingelement oder ein weiteres Schwingelement wieder empfangen werden und beispielsweise die Laufzeit, eine Amplitude des empfangenen Signals, die Form einer Einhüllenden oder Ähnliches ausgewertet werden. Entsprechende Messungen können beispielsweise dazu dienen, Eigenschaften des Wellenleiters selbst, beispielsweise Defekte im Wellenleiter, zu erfassen. Auch eine Benetzung des Wellenleiters durch Flüssigkeiten oder eine Berührung des Wellenleiters ändert dessen Schwingungseigenschaften und kann somit erfasst werden, beispielsweise um einen Berührungssensor oder einen Feuchtigkeitssensor zu implementieren.

Ein weiterer hochrelevanter Anwendungsbereich von Messeinrichtungen, die in Wellenleitern geführte Wellen zur Messdatenerfassung nutzen, sind Ultraschalldurchflusszähler. Ein solcher Durchflusszähler ist beispielsweise in der Druckschrift US 4 838 127 A offenbart.

In vielen Anwendungsfällen ist es vorteilhaft, Lamb-Wellen als geführte Wellen zu nutzen, da in diesem Fall beide senkrecht zur Ausbreitungsrichtung gegenüberliegende Oberflächen schwingen und somit beispielsweise an beiden Seiten des Wellenleiters Berührungen erkannt werden können bzw. Druckwellen in ein Fluid abgestrahlt werden können, ohne dass die Schwingelemente das Fluid kontaktieren müssen. Hierbei ist es jedoch bekannt, dass bei der Anregung von Lamb-Wellen mit einer bestimmten Frequenz stets mehrere Schwingungsmoden anregbar sind, die aufgrund der Dispersionsrelation des Wellenleiters unterschiedliche Phasengeschwindigkeiten aufweisen. In vielen Anwendungsfällen überlagern sich die Schwingungsmoden daher im Bereich des empfangenden Schwingelements derart, dass als Messsignal nur eine Überlagerung der aus den verschiedenen Schwingungsmoden resultierenden Signale erfasst werden kann. Häufig ist keine robuste Separierung der Signalanteile der verschiedenen Moden möglich bzw. es sind komplexe Algorithmen erforderlich, die einerseits die erforderliche Rechenleistung zur Messdatenauswertung erhöhen können und andererseits potenziell zusätzlich Artefakte oder andere Fehler in den Messdaten erzeugen können.

Daher ist es in vielen Anwendungsfällen vorteilhaft, eine weitgehend modenreine geführte Welle anzuregen und zur Messung zu nutzen. Dies wird in der obig genannten Druckschrift dadurch erreicht, dass eine Elektrodenstruktur eines Schwingelements, das an einer Außenfläche des Messrohrs angeordnet wird, auf die Wellenlänge einer gewünschten Schwingungsmode abgestimmt wird. Nachteilig an diesem Vorgehen ist, dass die relativ komplexe Elektrodenstruktur den Herstellungsaufwand für die Messeinrichtung merklich erhöht. Zudem führt die Abstimmung der Elektrodenstruktur auf eine bestimmte Wellenlänge dazu, dass eine modenreine Anregung nur für eine bestimmte Anregungsfrequenz möglich ist. Soll die Anregungsfrequenz variiert werden, beispielsweise um zusätzliche Informationen zu gewinnen oder um eine optimal resonante Anregung zu erreichen, resultiert bereits bei geringen Änderungen der Anregungsfrequenz eine deutliche Verschlechterung der Modenreinheit.

Der Erfindung liegt somit die Aufgabe zugrunde, eine vereinfachte Möglichkeit anzugeben, eine geführte Welle in einem Wellenleiter modenselektiv anzuregen, wobei insbesondere eine Modenselektivität über einem relativ breiten Frequenzbereich von Anregungsfrequenzen erreicht werden soll.

Die Aufgabe wird erfindungsgemäß durch ein Verfahren nach Anspruch 1 gelöst. Übliche Ansätze zur Anregung geführter Wellen in einem Wellenleiter koppeln die Schwingungsenergie über eine Oberfläche des Wellenleiters ein, die parallel zur Ausbreitungsrichtung der geführten Welle verläuft. Dies ermöglicht es beispielsweise in der eingangs genannten Druckschrift US 4 838 127, die Anregungsgeometrie auf eine gewünschte Wellenlänge abzustimmen. Aus den Druckschriften US 2009/016555 A1, US 2016/320219 A1, WO 98/19296 A1 und EP 1954413 A1 ist es auch bekannt, Schwingelemente an eine Stirnfläche eines Wellenleiters zu koppeln.

Im Rahmen der Erfindung wurde erkannt, dass überraschenderweise durch eine stirnseitige Anregung des Wellenleiters bereits bei Nutzung von sehr einfachen Schwingelementen, beispielsweise bei Nutzung einfacher Piezoquader, eine sehr gute Modenreinheit erreicht wird. Wie später noch genauer erläutert werden wird, kann durch geeignete Wahl der Polarisation eines piezoelektrischen Materials des Schwingelements im Wesentlichen ausschließlich eine Anregung von antisymmetrischen Schwingungsmoden oder im Wesentlichen ausschließlich eine Anregung von symmetrischen Schwingungsmoden erfolgen, wobei diese weitgehende Modenreinheit über einen sehr breiten Bereich von Anregungsfrequenzen von mehreren 100 kHz erhalten bleiben kann.

Abgesehen von toleranzbedingten Abweichungen kann die Stirnfläche im Wesentlichen senkrecht auf der Oberfläche des Wellenleiters stehen, die parallel zur Ausbreitungsrichtung verläuft. Toleranzbedingt können beispielsweise Abweichungen von weniger als 3° oder weniger als 1° von einem Winkel von 90° auftreten. Werden mehrere Schwingelemente genutzt, beispielsweise ein sendendes und ein empfangendes Schwingelement, können diese insbesondere an gegenüberliegenden Stirnflächen des Wellenleiters angeordnet werden.

Das verwendete Schwingelement umfasst einen piezoelektrischen Grundkörper und eine erste und zweite Elektrode, die an gegenüberliegenden Seitenflächen des Grundkörpers angeordnet sind, die sich in einem Winkel von weniger als 10° oder von weniger als 5° zu der Oberfläche des Wellenleiters erstrecken. Insbesondere können die Elektrodenflächen im Wesentlichen parallel zu der Oberfläche verlaufen, wobei toleranzbedingte Abweichungen von einem parallelen Verlauf von beispielsweise weniger als 3° oder weniger als 1° auftreten können. Das Schwingelement kann ausschließlich aus dem Grundkörper und der ersten und zweiten Elektrode bestehen. Es ist jedoch auch möglich, dass an der gleichen Seitenfläche mehrere erste bzw. zweite Elektroden angeordnet sind. Dies kann beispielsweise zweckmäßig sein, wenn ein piezoelektrischer Grundkörper genutzt wird, der in verschiedenen Abschnitten unterschiedliche Polarisationen aufweist, wie später noch erläutert werden wird. In diesem Fall können für die jeweiligen Abschnitte separate erste bzw. zweite Elektroden genutzt werden. Hierbei ist es möglich, an beiden Seitenflächen separate Elektroden für die Abschnitte vorzusehen oder an einer der Seitenflächen eine gemeinsame Elektrode zu nutzen. Allgemein kann das Schwingelement aus dem Grundkörper und den erläuterten Elektroden gebildet sein.

Bei der geführten Welle kann es sich um eine Mischung zwischen einer Transversalwelle und einer Longitudinalwelle handeln. Dies ist beispielsweise bei Lamb-Wellen der Fall. Die transversale Richtung der Schwingung kann hierbei der Dickenrichtung des plattenförmigen Wellenleiters bzw. der Richtung, in der die beiden Elektroden beabstandet sind, entsprechen. Unter einer modenselektiven Anregung ist insbesondere eine modenreine bzw. eine im Wesentlichen modenreine Anregung zu verstehen. Insbesondere kann bei einer modenselektiven Anregung einer ersten Schwingungsmode die Amplitude dieser Schwingungsmode um wenigstens den Faktor 5 oder 10 oder 20, vorzugsweise um einen höheren Faktor von beispielsweise 30 oder 40, größer sein als die Amplitude einer zweiten Schwingungsmode oder aller anderen, bei einer gegebenen Anregungsfrequenz gemäß der Dispersionsrelation des Wellenleiters anregbaren Schwingungsmoden.

Der Grundkörper durchführt einerseits zur Anregung der geführten Welle Dickenschwingungen senkrecht zu den die Elektroden tragenden Seitenflächen, wodurch modenselektiv eine symmetrische Schwingungsmode der geführten Welle angeregt wird. Dies kann dadurch erreicht werden, dass der piezoelektrische Grundkörper eine Polarisation aufweist, die im Wesentlichen parallel zur Verbindungslinie zwischen den Elektroden ist bzw. senkrecht auf den die Elektroden tragenden Seitenflächen steht.

Alternativ durchführt andererseits der Grundkörper zur Anregung der geführten Welle Scherschwingungen, wodurch modenselektiv eine antisymmetrische Schwingungsmode der geführten Welle angeregt wird. Dies kann dadurch erreicht werden, dass der Grundkörper in eine Richtung polarisiert ist, die parallel zu den die Elektroden tragenden Seitenflächen liegt. Vorzugsweise erfolgt eine Polarisation in Ausbreitungsrichtung der geführten Welle bzw. in entgegengesetzte Richtung. Ein starkes Scheren kann insbesondere erreicht werden, wenn der Grundkörper aus mehreren Schichten gebildet ist, die in Richtung senkrecht zu den die Elektroden tragenden Seitenflächen aufeinander folgen und die abwechselnd entgegengesetzte Polarisationen aufweisen.

Wie bereits obig erwähnt kann auch ein Grundkörper verwendet werden, der in unterschiedlichen Abschnitten unterschiedliche Polarisationen aufweist und an wenigstens einer Seitenfläche separate Elektroden zur separaten Spannungsbeaufschlagung dieser Abschnitte aufweist. Steht die Polarisation in einem dieser Abschnitte senkrecht auf den die Elektroden tragenden Seitenflächen und ist sie in einem weiteren Abschnitt parallel zu diesen Seitenflächen, so kann durch Wahl der zur Spanungsbeaufschlagung genutzten Elektroden wahlweise eine Dickenschwingung oder eine Scherschwingung angeregt werden und somit die anzuregende Schwingungsmode gewählt werden.

Es ist an sich bekannt, dass die Dispersionsrelation von Wellenleitern für Lamb-Wellen bei ausreichend niedrigen Frequenzen nur genau zwei Schwingungsmoden, nämlich genau eine antisymmetrische und eine symmetrische Schwingungsmode, aufweist. Da durch das obig erläuterte Vorgehen durch Wahl einer entsprechenden Polarisation und den hiermit resultierenden Dicken- bzw. Scherschwingungen, technisch einfach gewählt werden kann, ob antisymmetrische oder symmetrische Schwingungsmoden angeregt werden sollen, kann durch eine Wahl der Anregungsfrequenz derart, dass nur genau zwei Schwingungsmoden anregbar sind, letztlich eine einzige Schwingungsmode modenselektiv angeregt werden. In Versuchen wurde beispielsweise festgestellt, dass durch Nutzungen von Scherschwingungen über einen breiten Frequenzbereich von 700 kHz bis 1,3 MHz erreicht werden kann, dass die Amplitude der niedrigsten antisymmetrischen Schwingungsmode wenigstens um den Faktor 20 größer ist als die Amplitude der niedrigsten symmetrischen Schwingungsmode.

Es kann ein Wellenleiter verwendet werden, der durch eine gerade oder eine entlang der Oberfläche gekrümmte, insbesondere quaderförmige, Platte gebildet ist, wobei die Dicke der Platte senkrecht zur Oberfläche wenigstens um den Faktor 5 oder 10 oder 20 geringer ist als die Länge und Breite der Platte und/oder wobei die Ausdehnung des Schwingelements oder des Grundkörpers senkrecht zur Oberfläche um maximal 25% oder maximal 10% von der Dicke der Platte abweicht. Im relevanten Frequenzbereich um ein MHz ist es typischerweise vorteilhaft, relativ dünne Wellenleiter zu verwenden, wobei beispielsweise bei Nutzung des Wellenleiters als Seitenwand eines Messrohrs dennoch eine ausreichende Stabilität gegeben sein soll. Dies kann durch die erläuterten Dicken erreicht werden.

Die Dicke des Grundkörpers bzw. des Schwingelements sollte so gewählt werden, dass seine Schwingungen im Wesentlichen über die gesamte Dicke der Platte auf diese übertragen werden. Zugleich soll im Wesentlichen über die gesamte Dicke des Schwingelements bzw. des Grundkörpers eine gleichmäßige Ankopplung an den Wellenleiter erfolgen, um ein gleichmäßiges Schwingungsverhalten zu erreichen. Es ist somit typischerweise vorteilhaft, wenn die Plattendicke und die Ausdehnung des Schwingelements bzw. des Grundkörpers senkrecht zur Oberfläche zumindest näherungsweise gleich sind. Dennoch wurde erkannt, dass gewisse Abweichungen dieser Größen um beispielsweise 10 oder 25% die Modenreinheit der geführten Welle und somit beispielsweise Messungen, die die geführte Welle nutzen, allenfalls geringfügig beeinträchtigen und somit bedarfsgerecht genutzt werden können, beispielsweise um ein gewünschtes Resonanzverhalten des Schwingelements bzw. des Gesamtsystems zu erreichen.

Das Schwingelement, insbesondere der Grundkörper, können mit der Stirnfläche durch eine Klebeschicht verklebt sein. Eine Verklebung ermöglicht insbesondere eine Übertragung von Scherkräften zwischen Schwingelement und Wellenleiter, was insbesondere bezüglich der Anregung der antisymmetrischen Schwingungsmode hoch relevant ist. Auch die Modenreinheit der Anregung einer symmetrischen Schwingungsmode kann jedoch potenziell durch eine solche Verklebung verbessert werden.

Die Klebeschicht kann senkrecht zur Stirnfläche eine Dicke zwischen 5 µm und 100 µm aufweisen. Hierbei wurde festgestellt, dass eher dünne Klebeschichten von beispielsweise 10 µm oder 20 µm zu einer relativ konstanten Amplitude der angeregten Schwingungen führen, auch wenn die Anregungsfrequenz bzw. die Abmessungen des Schwingelements variiert werden. Bei dickeren Klebeschichten treten hingegen bei bestimmten Abmessungen bzw. Anregungsfrequenzen Resonanzspitzen auf, an denen die Schwingungsamplitude stark variiert. Dickere Klebeschichten können somit vorteilhafter sein, wenn nur eine Anregung mit einer bestimmten Frequenz verwendet werden soll, da eine resonante Anregung bei gleichem Energieeintrag höhere Amplituden und somit potenziell ein besseres Signal-zu-Rauschverhältnis von Messungen ermöglicht. Sollen hingegen deutlich unterschiedliche Frequenzen im Rahmen der Messungen genutzt werden, kann es vorteilhaft sein, Resonanzen durch einher relativ dünne Klebeschicht zu unterdrücken bzw. Anregungsfrequenzen zu wählen, die von solchen Resonanzspitzen beabstandet sind.

Die Anregungsfrequenz zur Anregung der geführten Welle kann so gewählt sein, dass aufgrund der Dispersionsrelation des Wellenleiters genau zwei Schwingungsmoden der geführten Welle angeregt werden können und/oder dass die geführte Welle eine Lamb-Welle ist und/oder dass die Schwingungsamplitude einer gewünschten Schwingungsmode der geführten Welle wenigstens um den Faktor 10 oder 20 oder 30 größer ist als die Schwingungsamplitude einer bei der Anregungsfrequenz anregbaren nicht gewünschten Schwingungsmode. Die Vorteile der genannten Merkmale wurden bereits obig erläutert.

Neben dem erfindungsgemäßen Verfahren betrifft die Erfindung eine Messeinrichtung nach Anspruch 6.

Die erfindungsgemäße Messeinrichtung kann insbesondere das erfindungsgemäße Verfahren nutzen, um die geführte Welle anzuregen. Die zum erfindungsgemäßen Verfahren erläuterten Merkmale sind mit den dort genannten Vorteilen auf die erfindungsgemäße Messeinrichtung übertragbar und umgekehrt.

Das weitere Schwingelement kann insbesondere an einer gegenüberliegenden Stirnfläche des gleichen Wellenleiters angeordnet sein. Dies ist insbesondere vorteilhaft, wenn die Messdaten eine direkte Führung der geführten Welle von dem Schwingelement zu dem weiteren Schwingelement innerhalb des Wellenleiters betreffen sollen. Dies ist beispielsweise zweckmäßig, wenn eine Verformung des Wellenleiters durch eine Berührung oder einen Druck in einem Fluidvolumen, das durch den Wellenleiter begrenzt wird, ermittelt werden soll, da eine solche Verformung des Wellenleiters seine Dispersionsrelation beeinflussen kann und somit beispielsweise durch Laufzeitmessungen ermittelt werden kann. Auch eine Temperatur des Wellenleiters, der Zustand des Wellenleiters, insbesondere Defekt des Wellenleiters, eine lokale Bedämpfung durch Aufbringen von Fremdstoffen, beispielsweise Flüssigkeiten, und Ähnliches können auf diese Weise anhand der Messdaten bzw. als Messgröße erfasst werden. Für solche Anwendungen kann die geführte Welle auch innerhalb des Wellenleiters, beispielsweise an dessen Ende, reflektiert werden und zum gleichen Schwingelement zurückgeführt werden.

In anderen Anwendungsfällen, beispielsweise wenn Eigenschaften von Fluiden ermittelt werden sollen, wie später noch erläutert werden wird, kann es vorteilhaft sein das weitere Schwingelement von dem Wellenleiter zu beabstanden bzw. an eine Stirnfläche eines weiteren Wellenleiters anzuordnen.

Die Messeinrichtung kann zur Ermittlung einer ein Fluid und/oder eine Fluidströmung des Fluids betreffend Fluidgröße, insbesondere eines Durchflussvolumens, als die Messgröße dienen und ein Messvolumen zur Aufnahme und/oder zur Führung des Fluids umfassen, wobei der Wellenleiter zumindest einen Abschnitt einer Seitenwand des Fluidvolumens bildet, wobei die Steuereinrichtung dazu eingerichtet ist, das Schwingelement derart anzusteuern, dass es die geführte Welle derart anregt, dass sie bei ihrer Ausbreitung parallel zu der Oberfläche eine weitere Welle, insbesondere eine Kompressionswelle, im Fluid anregt, die über das Fluid zurück zu dem Schwingelement oder zu dem weiteren Schwingelement geführt wird, um dieses zu der Schwingung anzuregen. Die weitere Welle kann insbesondere über die parallel zur Ausbreitungsrichtung verlaufende Oberfläche des Wellenleiters in das Fluid abgestrahlt werden.

Hierbei ist es an sich, beispielsweise aus der eingangs zitierten Druckschrift US 4 838 127 A, bekannt, Druckwellen im Fluid, die beispielsweise zur Durchflussmessung genutzt werden können, indirekt mit Hilfe von geführten Wellen anzuregen. Durch die erläuterte stirnflächenseitige Anregung des Wellenleiters durch ein potenziell sehr einfach aufgebautes Schwingelement wird hierbei jedoch einerseits ein erheblich geringerer Aufwand zur Implementierung erreicht. Andererseits können beispielsweise auch Messungen mit unterschiedlichen Frequenzen durchgeführt werden, wobei dennoch im Wesentlichen eine modenreine Anregung erfolgen kann, wie obig detailliert erläutert wurde.

Da die weitere Welle unter dem Rayleigh-Winkel in das Fluid abgestrahlt wird, dessen Sinus von dem Verhältnis der Schallgeschwindigkeit im Fluid zu der Phasengeschwindigkeit der geführten Welle in der Seitenwand abhängt, resultieren für unterschiedliche Anregungsfrequenzen und die hieraus resultierenden unterschiedlichen Phasengeschwindigkeiten der geführten Welle auch unterschiedliche Ausbreitungspfade im Fluid. Anhand des Einflusses der Anregungsfrequenz auf die Laufzeit oder auf andere Parameter, beispielsweise auf eine Empfangsamplitude oder eine Form einer Einhüllenden der Messdaten, können Rückschlüsse auf Fluideigenschaften bzw. Eigenschaften der Messeinrichtung gezogen werden. Beispielsweise können Ablagerungen im Messvolumen anhand von Laufzeitunterschieden bei einer Änderung der Anregungsfrequenz erkannt werden und Ähnliches. Eine Messung bei verschiedenen Frequenzen kann beispielsweise auch dazu dienen, die Robustheit einer Messung zu erhöhen, beispielsweise indem eine Durchflussgeschwindigkeit bzw. ein Durchflussvolumen für unterschiedliche Anregungsfrequenzen bestimmt wird und anschließend eine Mittelwertbildung erfolgt oder Ähnliches.

Das Schwingelement, insbesondere das weitere Schwingelement, ist einerseits kann durch einen piezoelektrischen Grundkörper und eine erste und eine zweite Elektrode gebildet, die an gegenüberliegenden Seitenflächen des Grundkörpers angeordnet sind, die sich in einem Winkel von weniger als 10° oder von weniger als 5° zu der Oberfläche des Wellenleiters erstrecken, wobei der Grundkörper parallel zu den Seitenflächen oder senkrecht zu den Seitenflächen polarisiert ist. Wie obig erläutert, kann durch diese Polarisation vorgegeben werden, ob eine modenselektive Anregung von symmetrischen oder von antisymmetrischen Schwingungsmoden der geführten Welle erfolgen soll.

Alternativ ist andererseits das Schwingelement, insbesondere das weitere Schwingelement, durch einen piezoelektrischen Grundkörper und Elektroden gebildet, die an gegenüberliegenden Seitenflächen des Grundkörpers angeordnet sind, die sich in einem Winkel von weniger als 10° oder von weniger als 5° zu der Oberfläche des Wellenleiters erstrecken, wobei der Grundkörper in einem ersten Abschnitt senkrecht zu den Seitenflächen und in einem zweiten Abschnitt parallel zu den Seitenflächen polarisiert ist, wobei an wenigstens einer der Seitenflächen in jedem der Abschnitte eine separate Elektrode angeordnet ist. In diesem Fall kann durch Wahl des zur Schwingungsanregung genutzten Elektrodenpaars das resultierende elektrische Feld entweder im Wesentlichen ausschließlich in dem ersten Abschnitt oder im Wesentlichen ausschließlich in dem zweiten Abschnitt wirken, womit im ersten Fall Dickenschwingungen und im zweiten Fall Scherschwingungen angeregt werden können. Somit kann je nach genutztem Elektrodenpaar im ersten Fall modenselektiv eine symmetrische Schwingungsmode und im zweiten Fall modenselektiv eine antisymmetrische Schwingungsmode angeregt werden.

Die Steuereinrichtung kann dazu eingerichtet sein, z.B. in zeitlich aufeinanderfolgenden Messungen oder abhängig von weiteren Parametern bzw. einer Nutzerwahl, die Elektrodenpaare selektiv anzusteuern und somit wahlfrei eine symmetrische oder eine antisymmetrische Schwingungsmode anzuregen. Es ist auch möglich, dass die Steuereinrichtung beide separaten Elektroden nutzt, um gleichzeitig die symmetrische und die antisymmetrische Schwingungsmode anzuregen.

Mit der Stirnfläche, mit der das Schwingelement gekoppelt ist, kann wenigstens ein zusätzliches Schwingelement schwingungsgekoppelt sein, wobei die Steuereinrichtung dazu eingerichtet sein kann, das zusätzliche Schwingelement alternativ zu dem Schwingelement oder gemeinsam mit dem Schwingelement anzusteuern, um modenselektiv die geführte Welle anzuregen. Der Aufbau des zusätzlichen Schwingelements kann dem obig erläuterten Aufbau des Schwingelements entsprechen. Es kann das gleiche Ansteuersignal genutzt werden, um das zusätzliche Schwingelement und das Schwingelement anzusteuern. Dies ist z.B. zweckmäßig, um mehrere in Breitenrichtung entlang der Stirnfläche beabstandete Schwingelemente zu nutzen, um gemeinsam eine näherungsweise ebene Welle anzuregen. Dies kann vorteilhaft sein, wenn eine Anregung über eine große Breite erfolgen soll, da mehrere kurze Schwingelemente im Rahmen der Herstellung besser zu handhaben sind als sehr lange Schwingelemente, die hierfür alternativ nutzbar wären.

Alternativ kann die Steuereinrichtung dazu eingerichtet sein, separate Ansteuersignale für die an der Stirnfläche angeordneten Schwingelemente bereitzustellen, z.B. um durch geeignete Wahl der relativen Amplituden und/oder Phasen der Anregung eine gerichtete Abstrahlung der geführten Welle in der Ebene des Wellenleiters zu erreichen.

Für die obig erläuterten Anwendungsfälle ist es in der Regel vorteilhaft, wenn durch das Schwingelement und das zusätzliche Schwingelement die gleiche Schwingungsmode modenselektiv angeregt wird, z.B. wenn diese Schwingelemente die gleiche Polarisation aufweisen. Alternativ können das Schwingelement und das zusätzliche Schwingelement jedoch auch zur Anregung unterschiedlicher Schwingungsmoden dienen. Beispielsweise können das Schwingelement und das zusätzliche Schwingelement zueinander unterschiedliche Polarisationen aufweisen. Die Steuereinrichtung kann dann dazu eingerichtet sein, wahlfrei, z.B. in Abhängigkeit einer Nutzerwahl oder in Abhängigkeit weiterer Parameter, einerseits das Schwingelement oder andererseits das zusätzliche Schwingelement anzusteuern, um wahlfrei eine modenselektive Anregung verschiedener Schwingungsmoden, insbesondere einer symmetrischen und einer antisymmetrischen Schwingungsmode, zu ermöglichen.

Die Abmessungen des Grundkörpers bzw. des Schwingelements können gewählt werden, um eine gewünschte Resonanzfrequenz zu erreichen und/oder um eine gewünschte Abstrahlcharakteristik zu erreichen. Hierbei wird vorzugsweise die Dicke des Schwingelements bzw. des Grundkörpers ungefähr gleich der Plattendicke des Wellenleiters gewählt.

Die Breite des Grundkörpers bzw. Schwingelements, also die Ausdehnung senkrecht zur Dicke und zur Ausbreitungsrichtung der geführten Welle, kann gewählt werden, um eine gewünschte Abstrahlcharakteristik zu erreichen. Da für eine Anregung in einem relativ schmalen Bereich näherungsweise das Abstrahlverhalten einer Punktquelle erreicht wird, resultiert ein keulenförmiges Abstrahlprofil. Dies kann beispielsweise dazu genutzt werden, sehr breite Messrohre in einem Durchflusszähler über die gesamte Breite anzuregen.

Mit zunehmender Breite des Anregungsbereichs nähert sich die Abstrahlcharakteristik einer ebenen Welle an. Insbesondere kann sich der Grundkörper bzw. das Schwingelement im Wesentlichen über die gesamte Breite des Wellenleiters, also beispielsweise über die gesamte Breite einer Seitenwand eines Durchflusszählers, erstrecken, um über die gesamte Breite Informationen über ein Strömungsprofil zu gewinnen oder Ähnliches.

Die Ausdehnung des Schwingelements bzw. Grundkörpers in Ausbreitungsrichtung bzw. Erstreckungsrichtung des Wellenleiters verbleibt als freier Parameter, um eine Resonanzfrequenz anzupassen. Hierbei kann die Resonanzfrequenz gezielt so angepasst werden, dass in einem relevanten Bereich eine resonante Anregung möglich ist, oder so, dass eine genutzte Anregungsfrequenz bzw. ein genutzter Anregungsfrequenzbereich weit von der Resonanzfrequenz entfernt sind.

Das zur Messeinrichtung erläuterte Vorgehen kann auch auf das erfindungsgemäße Verfahren übertragen werden, das in diesem Fall auch als Messverfahren zur Ermittlung einer Messgröße bzw. insbesondere als Messverfahren zur Ermittlung einer ein Fluid und/oder eine Fluidströmung des Fluids betreffenden Fluidgröße betrachtet werden kann.

Das Verfahren umfasst insbesondere als Teilverfahren das obig erläuterte Verfahren zur modenselektiven Anregung und zusätzlich als Schritte das Versetzen des Schwingelements bzw. des weiteren Schwingelements in Schwingung durch die geführte Welle bzw. durch eine durch die geführte Welle angeregte weitere Welle, die Erfassung von Messdaten, die diese Schwingung betreffen durch die Steuereinrichtung und die Ermittlung der Messgröße aus den Messdaten. Ergänzend kann dieses Messverfahren die Anregung der geführten Welle derart umfassen, dass sie bei ihrer Ausbreitung parallel zu der Oberfläche eine weitere Welle, insbesondere eine Kompressionswelle, im Fluid anregt, die über das Fluid zurück zu dem Schwingelement oder zu dem anderen Schwingelement geführt wird, um dieses zu den Schwingungen anzuregen.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: ein Ausführungsbeispiel der erfindungsgemäßen Messeinrichtung, durch die ein Ausführungsbeispiel des erfindungsgemäßen Verfahrens zur Anregung einer geführten Welle verwendet wird,
- Fig. 2 und 3: Detailansichten verschiedener Varianten der in Fig. 1 gezeigten Messeinrichtung,
- Fig. 4: ein weiteres Ausführungsbeispiel einer erfindungsgemäßen Messeinrichtung, durch die ein Ausführungsbeispiel des erfindungsgemäßen Verfahrens genutzt wird,
- Fig. 5 - 8: verschiedene Messergebnisse zur Anregung von geführten Wellen durch Ausführungsbeispiele des erfindungsgemäßen Verfahrens, und
- Fig. 9 und 10: Detailansichten weiterer Varianten der in Fig. 1 bzw. 4 gezeigten Messeinrichtungen.

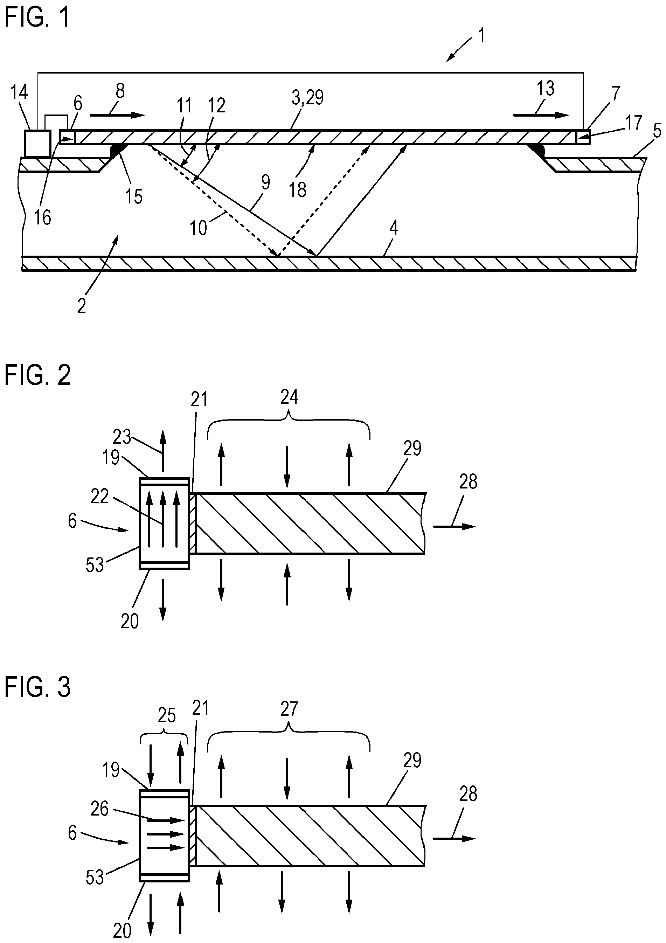

Fig. 1 zeigt eine Messeinrichtung 1, die dazu dient, wenigstens eine ein Fluid bzw. eine Fluidströmung betreffende Fluidgröße zu ermitteln. Beispielsweise kann ein Volumenstrom des Fluids, das durch das Messvolumen 2 strömt, ermittelt werden. Ergänzend oder alternativ hierzu können der Druck im Messvolumen, eine Temperatur des Fluids und/oder eine Fluidart oder Fluidzusammensetzung bestimmt werden. Das Messvolumen wird durch mehrere Seitenwände 3, 4, 5 begrenzt, wobei die Seitenwand 3 durch einen Wellenleiter 29 gebildet ist. An den Stirnflächen 16, 17 des Wellenleiters 29 sind beabstandet voneinander zwei Schwingelemente 6, 7 angebracht.

Um eine später noch erläuterte Laufzeitmessung durchzuführen, soll durch die Steuereinrichtung 14 das Schwingelement 6 angesteuert werden, um modenselektiv eine geführte Welle 8 in der Seitenwand 3 bzw. im Wellenleiter 29 anzuregen. Die Modenselektivität kann dadurch erreicht werden, dass zunächst eine Anregungsfrequenz gewählt wird, bei der nur genau zwei Schwingungsmoden von Lamb-Wellen, nämlich eine antisymmetrische Schwingungsmode und eine symmetrische Schwingungsmode angeregt werden können. Die Modenselektivität bezüglich der Symmetrie der angeregten Schwingungsmode wird dadurch erreicht, dass das Schwingelement 6 an der Stirnseite 16 des Wellenleiters 29 angeordnet ist. Durch geeignete Auswahl der Polarisierung 22, 26 eines piezoelektrischen Grundkörpers 53 des Schwingelements 6 kann vorgegeben werden, ob im Wesentlichen ausschließlich eine Anregung der symmetrischen oder der antisymmetrischen Schwingungsmode erfolgen soll.

Im Fall der Figur 2 werden im Wesentlichen ausschließlich symmetrische Schwingungsmoden angeregt, wie durch die Pfeile 24 verdeutlicht wird. Bei einer symmetrischen Schwingungsmode schwingt die in dem Fluid zugewandte Oberfläche 18 und die gegenüberliegende Oberfläche an einer jeweiligen Position in entgegengesetzte Richtung. Eine solche Schwingung wird angeregt, da der Grundkörper 53, der gemeinsam mit den Elektroden 19, 20 das Schwingelement 6 bildet, eine Polarisierung 22 aufweist, die parallel zu der Verbindung zwischen den Elektroden 19, 20 verläuft bzw. senkrecht zu den Ebenen der Seitenflächen des Grundkörpers 53 steht, an denen die Elektroden 19, 20 angeordnet sind. Dies führt dazu, dass das Schwingelement 6 bei einem Anlegen einer Wechselspannung an einer der Elektroden 19, 20, während die andere Elektrode auf einem Referenzpotenzial liegt bzw. bei Anlegen von Wechselspannungen mit umgekehrter Polarität an beide Elektroden 19, 20 Dickenschwingungen ausführt, wie durch den Pfeil 23 dargestellt ist. Durch die Klebeschicht 21 werden diese Dickenschwingungen auf den Wellenleiter 29 übertragen. Somit resultiert eine geführte Welle, die sich in die Ausbreitungsrichtung 28 ausbreitet und die einen Transversalanteil hat, der die durch die Pfeile 24 gezeigten Dickenschwingungen des Wellenleiters 29 begründet.

Fig. 3 zeigt den Fall, in dem eine antisymmetrische Schwingungsmode angeregt werden soll. Die Polarisierung 26 des Grundkörper 53 ist diesem Fall parallel zur Elektrodenfläche der Elektroden 19, 20 ausgerichtet. Aus Übersichtlichkeitsgründen ist hierbei nur eine Polarisierung 26 in eine Richtung dargestellt. Zur Ausbildung von Scherschwingungen kann es vorteilhaft sein, den Grundkörper 53 aus mehreren Schichten aufzubauen, die abwechselnd in die durch die Pfeile gezeigte Richtung und in die entgegengesetzte Richtung polarisiert sind.

Die durch die Pfeile 25 schematisch dargestellten Scherschwingungen werden über die Klebeschicht 21 auf den Wellenleiter 29 übertragen, so dass in diesem eine antisymmetrische Schwingungsmode angeregt wird, bei der, wie durch die Pfeile 27 dargestellt ist, die Oberfläche 18 sowie die gegenüberliegende Oberfläche an einer Position in Längsrichtung des Wellenleiters 29 stets in die gleiche Richtung schwingen. Durch geeignete Wahl der Polarisation des Grundkörpers 53 kann somit gewählt werden, für welche der Schwingungsmoden eine modenselektive Anregung erfolgen soll und welche der Schwingungsmoden weitgehend unterdrückt werden soll.

Da es sich bei der geführten Welle 8 um eine kombinierte Longitudinal- und Transversalwelle, insbesondere um eine Lamb-Welle handelt, regt diese bei ihrer Ausbreitung weitere Wellen 9, 10, nämlich Druckwellen, im Fluid an, die in Abhängigkeit der Phasengeschwindigkeit der Schwingungsmode der geführten Welle 8 in unterschiedlichen Rayleigh-Winkeln 11, 12 in das Fluid abgestrahlt werden. Im Beispiel werden die weiteren Wellen 9, 10 einmal an der gegenüberliegenden Seitenwand 4 reflektiert und regen bei ihrem Auftreffen auf die Seitenwand 3 eine weitere geführte Welle 13 an, die zum weiteren Schwingelement 7 geführt wird und dieses somit in Schwingung versetzt. In alternativen Ausgestaltungen können die weiteren Wellen 9, 10 auch mehrfach an den Seitenwänden 3, 4 reflektiert werden. Es wäre auch möglich, das weitere Schwingelement 7 an der Seitenwand 4 anzuordnen, so dass die weiteren Wellen 9, 10 beispielsweise überhaupt nicht an der Seitenwand 4 reflektiert werden müssen oder zumindest einmal an der Seitenwand 3 reflektiert werden, um über die Seitenwand 4 empfangen zu werden.

Die Nutzung von durch das Fluid geführten Ultraschallwellen zur Erfassung von Fluideigenschaften bzw. Strömungseigenschaften ist prinzipiell wohl bekannt. Der gezeigte Ansatz könnte beispielsweise genutzt werden, um eine Laufzeitdifferenz zwischen der Laufzeit der Ultraschallwelle von dem Schwingelement 6 zum Schwingelement 7 und der Laufzeit in die umgekehrte Richtung zu erfassen und aus dieser eine Strömungsgeschwindigkeit zu berechnen. Auch Ansätze zur Ermittlung anderer Messgrößen sind im Stand der Technik bekannt, beispielsweise zur Ermittlung eines Drucks, einer Temperatur und einer Fluidart bzw. -zusammensetzung.

Da die obig erläuterte stirnseitige Anregung der geführten Welle eine gute Modenselektivität über einen relativ weiten Frequenzbereich ermöglicht, können in der Messeinrichtung 1 auch geführte Wellen 8 mit unterschiedlichen Anregungsfrequenzen mit guter Modenselektivität angeregt werden. Hieraus resultieren aufgrund der Dispersionsrelation des Wellenleiters 29 auch unterschiedliche Phasengeschwindigkeiten der geführten Welle und somit unterschiedliche Rayleigh-Winkel 11, 12 und Ausbreitungspfade für die weiteren Wellen 9, 10. Dies ist in der Fig. 1 beispielhaft für zwei Anregungsfrequenzen und somit zwei Ausbreitungspfade der weiteren Wellen 9, 10 dargestellt. Es kann jedoch eine größere Anzahl von Anregungsfrequenzen nacheinander verwendet werden bzw. die Anregungsfrequenz kann kontinuierlich variiert werden.

Unterschiedliche Anregungsfrequenzen können beispielsweise genutzt werden, um durch redundante Messungen eine Messgenauigkeit zu verbessern, einen Einfluss des Strömungsprofils auf die Messdaten zu reduzieren oder beispielsweise Ablagerungen im Messvolumen 2 zu erkennen. Um einen direkten Fluidkontakt der Schwingelemente 6, 7 zu vermeiden, ist der Wellenleiter 29 über eine Dichtung 15 mit der weiteren Seitenwand 5 verbunden. Es wurde festgestellt, dass die Dichtung 15 die geführte Welle 8 nur unwesentlich bedämpft und die erreichte Modenreinheit allenfalls geringfügig beeinträchtigt.

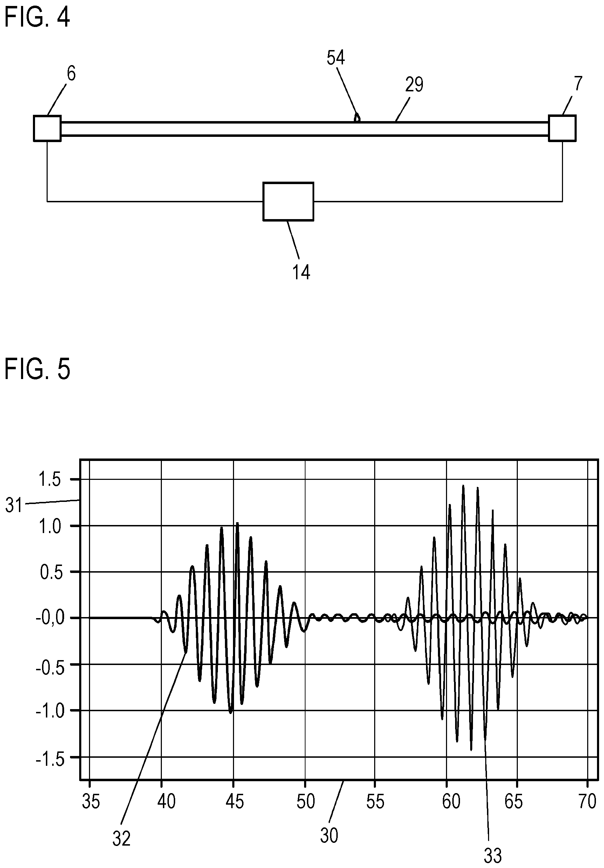

Während eine Messung von Fluideigenschaften ein hochrelevanter Anwendungsfall für die erläuterte stirnseitige Anregung einer geführten Welle ist, kann dieser Ansatz jedoch auf eine Vielzahl weiterer Messeinrichtungen übertragen werden. Rein beispielhaft ist in Fig.4 ein Feuchtigkeitssensor gezeigt, der einen Wellenleiter 29, zwei stirnseitig an diesem angeordnete Schwingelemente 6, 7 und eine Steuereinrichtung 14 umfasst. Die Anregung und der Empfang der geführten Welle erfolgt, wie bereits zu den Fig. 1 - 3 erläutert wurde. In der in Fig. 4 gezeigten Messeinrichtung wird ausgenutzt, dass ein Aufbringen von Fluid, beispielsweise von dem Tropfen 54, auf den Wellenleiter 29 dessen Schwingungsverhalten beeinträchtigt und beispielsweise die Amplitude der geführten Welle beim Erreichen des Schwingelements 7 deutlich reduzieren kann. Da eine solche Amplitudenreduzierung vom Grad der Benetzung des Wellenleiters 29 abhängen kann, kann durch die in Fig.4 gezeigte Anordnung mit sehr geringem technischen Aufwand ein Feuchtigkeitssensor für relativ große Flächen implementiert werden.

Fig. 5 zeigt beispielhaft simulierte Messdaten 32, 33, wie sie bei einer direkten Führung der geführten Welle 8 innerhalb des Wellenleiters 29 über das weitere Schwingelement 17 empfangen werden können, wobei Messdaten 32, 33 für zwei unterschiedliche Wellenleiter gemeinsam dargestellt sind. Die X-Achse 30 zeigt hierbei eine Laufzeit eines Wellenpakets vom Schwingelement 6 zum Schwingelement 7 in µs und die Y-Achse 31 zeigt den Verlauf des Spannungspotenzials an den Elektroden 19, 20 des Schwingelements 7. Die Messdaten 32 wurden für die Nutzung eines Wellenleiters 29 aus Stahl und die Messdaten 33 für die Nutzung eines Wellenleiters aus Kupfer ermittelt. Daraus, dass beide Messdaten 32, 33 ein klares Pulssignal und abgesehen davon nur eine sehr kleine Signalamplitude zeigen, ist erkennbar, dass die Messdaten 32, 33 nahezu ausschließlich durch eine einzige Schwingungsmode erzeugt sind und die zweite Schwingungsmode, die eine unterschiedliche Laufzeit aufweisen würde, in den Messdaten 32, 33 kaum erkennbar ist. Das vorgeschlagene Vorgehen ist somit für eine Vielzahl unterschiedlicher Wellenleitermaterialien geeignet.

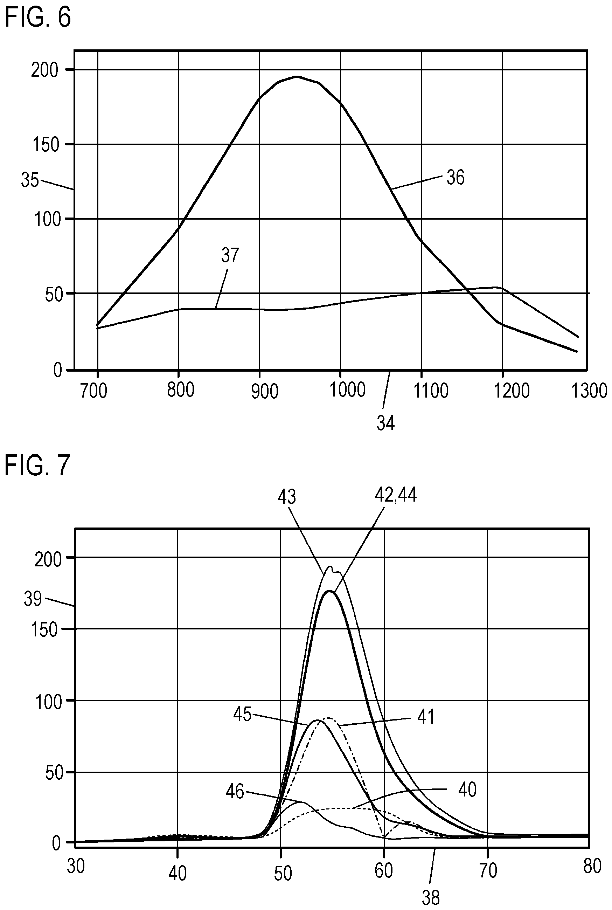

Fig. 6 zeigt durch einen Prototyp erfasste Messdaten bezüglich eines Frequenzsweeps, wobei die Frequenz auf der X-Achse 34 in kHz angegeben ist. Die Kurve 36 zeigt hierbei die Amplitude der niedrigsten antisymmetrischen Schwingungsmode einer Lamb-Welle. Hierbei ist eine leichte Resonanz im Frequenzbereich von ca. 950 kHz zu erkennen. Die Amplitude ist auf der Y-Achse 35 in mV dargestellt.

Die Kurve 37 zeigt das Amplitudenverhältnis zwischen der Amplitude der niedrigsten antisymmetrischen Schwingungsmode und der niedrigsten symmetrischen Schwingungsmode bei diesem Frequenzsweep. Hierbei sind die Kuren 36, 37 so skaliert, dass die Y-Achse 35 für die Kurve 37 auch dieses Verhältnis zeigt. Wie klar zu erkennen ist, wird über ein breites Frequenzband von 700 kHz bis zumindest 1,2 MHz ein Amplitudenverhältnis zwischen 25 und 50 erreicht, so dass in einem breiten Frequenzbereich eine im Wesentlichen modenreine Anregung der antisymmetrischen Schwingungsmode erfolgt.

Soll der erläuterte breite Frequenzbereich für Laufzeitmessungen nutzbar sein, sollten in diesen auch die Einhüllenden von Wellenpulsen klar erkennbar sein. Daher sind in Fig. 7 beispielhaft die resultierenden Einhüllenden für eine Vielzahl von beispielhaft gewählten Anregungsfrequenzen dargestellt, wobei die X-Achse 38 die Laufzeit des entsprechenden Pulses in µs und die Y-Achse die Spannungsamplitude am empfangenden Schwingelement 7 in mV darstellt. Hierbei wurde die Einhüllende 40 für eine Frequenz von 700 kHz, die Einhüllende 41 für eine Frequenz von 800 kHz, die Einhüllende 42 für eine Frequenz von 900 kHz, die Einhüllende 43 für eine Frequenz von 950 kHz, die Einhüllende 44 für eine Frequenz von 1,0 MHz, die Einhüllende 45 für eine Frequenz von 1,1 MHz und die Einhüllende 46 für eine Frequenz von 1,2 MHz ermittelt. Hierbei traten zwar für die Einhüllenden 42, 44, also für Anregungsfrequenzen von 900 kHz und 1,0 MHz, geringfügige Unterschiede auf, wobei diese Unterschiede in der gezeigten Skalierung jedoch kaum zu erkennen wären, weshalb einfachheitshalber eine gemeinsame Kurve für beide Einhüllenden 42, 44 dargestellt ist.

Wie in Fig. 7 zu erkennen ist, könnte eine Laufzeiterfassung mit den Einhüllenden 40, 46, also bei Anregungsfrequenzen von 700 kHz bzw. 1,2 kHz, aufgrund der relativ geringen Amplitude und der deutlichen Verbreitung der Einhüllenden 40 problematisch sein. Für einen relativ breiten Frequenzbereich von 800 kHz bis 1,1 MHz, also für die Einhüllenden 41 bis 45 ist jedoch problemlos eine Laufzeitmessung möglich, so dass Laufzeitmessungen mit der erläuterten Anregungsstrategie über einen sehr breiten Frequenzbereich ausgeführt werden können.

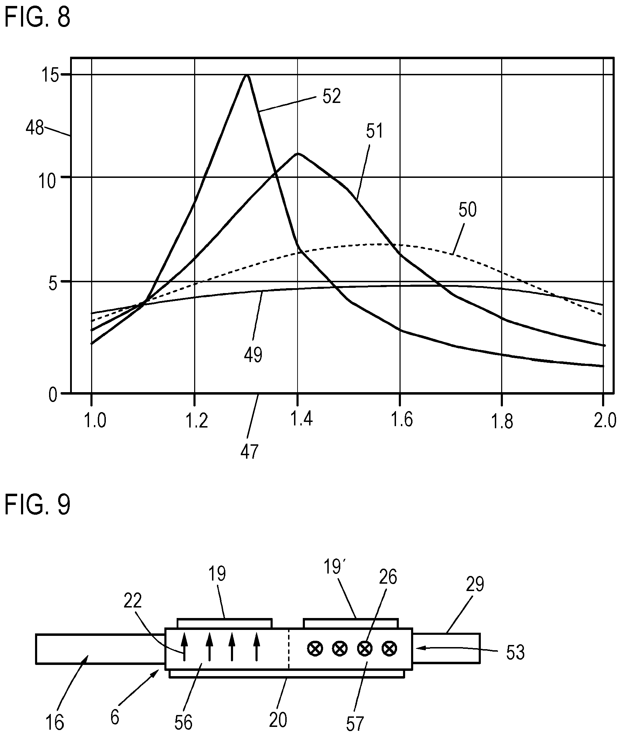

Zuletzt wird mit Bezug auf Fig. 8 der Einfluss der Dicke der Klebeschicht 21 auf den Zusammenhang der Ausdehnung des Grundkörpers 53 in Dickenrichtung, also in die Vertikalrichtung in Fig.2, 3, auf die Amplitude der angeregten niedrigsten antisymmetrischen Schwingungsmode diskutiert. Hierbei wird eine Breite des Schwingelements senkrecht zur Dicken- und Ausbreitungsrichtung von 1 mm angenommen, die X-Achse 48 zeigt die Dicke des Grundkörpers 53 in Millimeter und die Y-Achse 48 die Amplitude der angeregten antisymmetrischen Schwingungsmode. Als Dicke des Wellenleiters wurden 1,5 mm genutzt.

Die Kurve 49 zeigt eine Dicke der Klebeschicht von 10 µm, die Kurve 50 eine Dicke der Klebeschicht von 20 µm, die Kurve 51 eine Dicke der Klebeschicht von 40 µm und die Kurve 52 eine Dicke der Klebeschicht von 80 µm. Hierbei ist eindeutig zu erkennen, dass bei dicken Klebeschichten zwar besonders hohe Anregungsamplituden erreicht werden können, die erreichte Anregungsamplitude jedoch stark von den Abmessungen des Grundkörpers 53 bzw. des Schwingelements 6 abhängt. Anders ausgedrückt wird bei dicken Klebeschichten ein starkes Resonanzverhalten beobachtet. Dicke Klebeschichten sind somit insbesondere vorteilhaft, wenn ein Betrieb bei einer definierten Resonanzfrequenz mit hierauf abgestimmten Abmessungen erfolgen soll.

Umgekehrt resultiert bei relativen dünnen Klebeschichten, also beispielsweise bei den Kurven 49 und 50, nur eine geringe Abhängigkeit der erreichten Amplitude von den Abmessungen des Grundkörpers. Dies indiziert auch eine geringe Frequenzabhängigkeit der Schwingungsamplitude. Die Nutzung von geringen Schichtdicken von Klebeschichten kann insbesondere dann vorteilhaft sein, wenn eine Anregung von geführten Wellen über einen relativ breiten Frequenzbereich gewünscht ist. Bezüglich der Abmessungen des Grundkörpers 53 bzw. des Schwingelements 6 ist generell festzustellen, dass sowohl eine größere Breite als auch eine größere Länge zu einer Absenkung der Resonanzfrequenz führt. Die Variation entsprechender Abmessungen kann genutzt werden, um wahlweise für eine gewünschte Anregungsfrequenz eine Resonanz und somit eine besonders hohe Amplitude zu erreichen oder die Resonanz von der Anregungsfrequenz bzw. dem Anregungsfrequenzbereich entfernt zu wählen, so dass eine gleichmäßige Anregung über einen relativ breiten Frequenzbereich ermöglicht wird.

Fig. 9 zeigt eine alternative Ausgestaltung des Schwingelements 6, die statt der in Fig. 2 und 3 gezeigten Ausgestaltungen genutzt werden kann. Zur besseren Darstellung der Unterschiede ist hierbei eine Draufsicht auf die Stirnfläche 16 dargestellt. Wesentlicher Unterschied zu den vorangehend diskutierten Ausgestaltungen ist, dass der piezoelektrische Grundkörper 53 nicht durchgehend in die gleiche Richtung polarisiert ist. Stattdessen weist der Grundkörper 53 in zwei Abschnitten 56, 57 zueinander unterschiedlich ausgerichtete Polarisierungen 22, 26 auf. In dem ersten Abschnitt 56 verläuft die Polarisierung 22 senkrecht zu den Seitenflächen, an denen die Elektroden 19, 19', 20 angeordnet sind. In dem zweiten Abschnitt 57 ist die Polarisierung 26 parallel zu diesen Seitenflächen. An der Oberseite werden für die Abschnitte 56, 57 separate Elektroden 19, 19'genutzt.

In diesem Fall kann durch Wahl des zur Schwingungsanregung genutzten Elektrodenpaars das resultierende elektrische Feld entweder im Wesentlichen ausschließlich in dem ersten Abschnitt 56 oder im Wesentlichen ausschließlich in dem zweiten Abschnitt 57 wirken, womit im ersten Fall Dickenschwingungen und im zweiten Fall Scherschwingungen angeregt werden können. Somit kann je nach genutztem Elektrodenpaar im ersten Fall modenselektiv eine symmetrische Schwingungsmode und im zweiten Fall modenselektiv eine antisymmetrische Schwingungsmode angeregt werden.

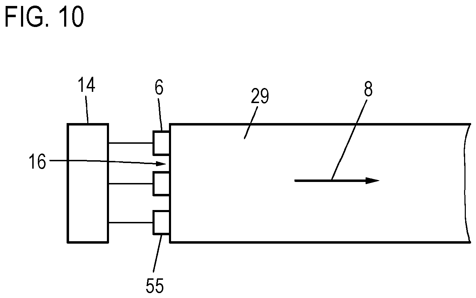

In dem in Fig. 10 gezeigten Ausführungsbeispiel sind mit der Stirnfläche 16, mit der das Schwingelement 6 gekoppelt ist, zusätzliche Schwingelemente 55 schwingungsgekoppelt. Die Steuereinrichtung 14 ist dazu eingerichtet, die zusätzlichen Schwingelemente 55 alternativ zu dem Schwingelement 6 oder auch gemeinsam mit dem Schwingelement 6 anzusteuern, um modenselektiv die geführte Welle anzuregen.

Hierbei kann das gleiche Ansteuersignal genutzt werden, um die zusätzlichen Schwingelemente 55 und das Schwingelement 6 anzusteuern. Hierdurch kann durch die Schwingelemente 6, 55 gemeinsam eine näherungsweise ebene Welle angeregt werden. Alternativ können separate Ansteuersignale für die Schwingelemente 6, 55 bereitgestellt werden, z.B. um durch geeignete Wahl der relativen Amplituden und/oder Phasen der Anregung eine gerichtete Abstrahlung der geführten Welle 8 in der Ebene des Wellenleiters 29 zu erreichen.

Es wäre auch möglich, dass die Steuereinrichtung 14 wahlfrei ausschließlich das Schwingelement 6 oder die zusätzlichen Schwingelemente 55 zur Anregung der geführten Welle 8 ansteuert. Dies kann beispielsweise zweckmäßig sein, wenn das Schwingelement 6 und die zusätzlichen Schwingelement 55 zueinander unterschiedliche Polarisationen aufweisen. Durch Wahl des angesteuerten Schwingelements kann die Steuereinrichtung 14 in diesem Fall wahlfrei eine modenselektive Anregung verschiedener Schwingungsmoden zu ermöglichen.

### Bezugszeichenliste

- 1: Messeinrichtung
- 2: Messvolumen
- 3: Seitenwand
- 4: Seitenwand
- 5: Seitenwand
- 6: Schwingelement
- 7: Schwingelement
- 8: geführte Welle
- 9: Welle
- 10: Welle
- 11: Rayleigh-Winkel
- 12: Rayleigh-Winkel
- 13: Welle
- 14: Steuereinrichtung
- 15: Dichtung
- 16: Stirnfläche
- 17: Stirnfläche
- 18: Oberfläche
- 19: Elektrode
- 19': Elektrode
- 20: Elektrode
- 21: Klebeschicht
- 22: Polarisierung
- 23: Pfeil
- 24: Pfeile
- 25: Pfeile
- 26: Polarisierung
- 27: Pfeile
- 28: Ausbreitungsrichtung
- 29: Wellenleiter
- 30: X-Achse
- 31: Y-Achse
- 32: Messdaten
- 33: Messdaten
- 34: X-Achse
- 35: Y-Achse
- 36: Kurve
- 37: Kurve
- 38: X-Achse
- 39: Y-Achse
- 40: Einhüllende
- 41: Einhüllende
- 42: Einhüllende
- 43: Einhüllende
- 44: Einhüllende
- 45: Einhüllende
- 46: Einhüllende
- 47: X-Achse
- 48: Y-Achse
- 49: Kurve
- 50: Kurve
- 51: Kurve
- 52: Kurve
- 53: Grundkörper
- 54: Tropfen
- 55: Schwingelement
- 56: Abschnitt
- 57: Abschnitt

## Patentansprüche

1. Verfahren zur modenselektiven Anregung einer geführten Welle (8) in einem plattenförmigen Wellenleiter (29), deren Ausbreitungsrichtung (28) parallel zu einer Oberfläche (18) des Wellenleiters (29) verläuft, durch ein mit dem Wellenleiter (29) gekoppeltes Schwingelement (6), das durch eine Steuereinrichtung (14) zu Schwingungen angeregt wird, wobei das Schwingelement (14) mit einer Stirnfläche (16) des Wellenleiters (29) schwingungsgekoppelt ist, die in einem Winkel von wenigstens 80° oder von wenigstens 85° zu der Oberfläche (18) des Wellenleiters (29) steht, **dadurch gekennzeichnet,**
**dass** das verwendete Schwingelement (6) einen piezoelektrischen Grundkörper (53) und eine erste und eine zweite Elektrode (19, 19', 20) umfasst, die an gegenüberliegenden Seitenflächen des Grundkörpers (53) angeordnet sind, die sich in einem Winkel von weniger als 10° oder von weniger als 5° zu der Oberfläche (18) des Wellenleiters (29) erstrecken,
wobei der Grundkörper (53) einerseits zur Anregung der geführten Welle (8) Dickenschwingungen senkrecht zu den die Elektroden (19, 19', 20) tragenden Seitenflächen durchführt, wodurch modenselektiv eine symmetrische Schwingungsmode der geführten Welle (8) angeregt wird, oder
wobei der Grundkörper (53) andererseits zur Anregung der geführten Welle (8) Scherschwingungen durchführt, wodurch modenselektiv eine antisymmetrische Schwingungsmode der geführten Welle (8) angeregt wird.

2. Verfahren nach Anspruch 1, **dadurch gekennzeichnet, dass** ein Wellenleiter (29) verwendet wird, der durch eine gerade oder eine entlang der Oberfläche (18) gekrümmte, insbesondere quaderförmige, Platte gebildet ist, wobei die Dicke der Platte senkrecht zur Oberfläche (18) wenigstens um den Faktor 5 oder 10 oder 20 geringer ist als die Länge und Breite der Platte und/oder wobei die Ausdehnung des Schwingelements (6) oder des Grundkörpers (53) senkrecht zur Oberfläche (18) um maximal 25% oder um maximal 10% von der Dicke der Platte abweicht.

3. Verfahren nach Anspruch 1 oder 2, **dadurch gekennzeichnet, dass** das Schwingelement (6), insbesondere der Grundkörper (53), mit der Stirnfläche (16) durch eine Klebeschicht (21) verklebt ist.

4. Verfahren nach Anspruch 3, **dadurch gekennzeichnet, dass** die Klebeschicht (21) senkrecht zur Stirnfläche (16) eine Dicke zwischen 5 µm und 100 µm aufweist.

5. Verfahren nach einem der vorangehenden Ansprüche, **dadurch gekennzeichnet, dass** die Anregungsfrequenz zur Anregung der geführten Welle (8) so gewählt ist, dass aufgrund der Dispersionsrelation des Wellenleiters (29) genau zwei Schwingungsmoden der geführten Welle (8) angeregt werden können und/oder dass die geführte Welle (8) eine Lamb-Welle ist und/oder dass die Schwingungsamplitude einer gewünschten Schwingungsmode der geführten Welle (8) wenigstens um den Faktor 10 oder 20 oder 30 größer ist als die Schwingungsamplitude einer bei der Anregungsfrequenz anregbaren nicht gewünschten Schwingungsmode.

6. Messeinrichtung mit einer Steuereinrichtung (14), einem plattenförmigen Wellenleiter (29) und einem mit dem Wellenleiter (29) gekoppelten Schwingelement (6), wobei die Steuereinrichtung (14) dazu eingerichtet ist, das Schwingelement (6) derart anzusteuern, dass es modenselektiv eine geführte Welle (8) derart anregt, dass sie sich in dem oder dem jeweiligen Wellenleiter (29) parallel zu einer Oberfläche (18) des Wellenleiters (29) ausbreitet, wobei die geführte Welle (8) oder eine durch die geführte Welle (8) angeregte weitere Welle (9, 10) das Schwingelement (6) oder ein weiteres Schwingelement (7) in Schwingung versetzt, wobei die Steuereinrichtung (14) dazu eingerichtet ist, die Schwingung des Schwingelements (6) oder des weiteren Schwingelements (7) betreffende Messdaten zu erfassen und eine Messgröße in Abhängigkeit dieser Messdaten zu ermitteln, wobei das Schwingelement (6) mit einer Stirnfläche (16) des Wellenleiters (29) schwingungsgekoppelt ist, die in einem Winkel von wenigstens 80° oder von wenigstens 85° zu der Oberfläche (18) des Wellenleiters (29) steht, **dadurch gekennzeichnet, dass** einerseits das Schwingelement (6), insbesondere das weitere Schwingelement (7), durch einen piezoelektrischen Grundkörper (53) und eine erste und eine zweite Elektrode (19, 20) gebildet sind, die an gegenüberliegenden Seitenflächen des Grundkörpers (53) angeordnet sind, die sich in einem Winkel von weniger als 10° oder von weniger als 5° zu der Oberfläche (18) des Wellenleiters (29) erstrecken, wobei der Grundkörper (53) parallel zu den Seitenflächen oder senkrecht zu den Seitenflächen polarisiert ist, oder dass andererseits das Schwingelement (6), insbesondere das weitere Schwingelement (7), durch einen piezoelektrischen Grundkörper (53) und Elektroden (19, 19', 20) gebildet sind, die an gegenüberliegenden Seitenflächen des Grundkörpers (53) angeordnet sind, die sich in einem Winkel von weniger als 10° oder von weniger als 5° zu der Oberfläche (18) des Wellenleiters (29) erstrecken, wobei der Grundkörper (53) in einem ersten Abschnitt (56) senkrecht zu den Seitenflächen und in einem zweiten Abschnitt (57) parallel zu den Seitenflächen polarisiert ist, wobei an wenigstens einer der Seitenflächen in jedem der Abschnitte (56, 57) eine separate Elektrode (19, 19') angeordnet ist.

7. Messeinrichtung nach Anspruch 6, **dadurch gekennzeichnet, dass** die Messeinrichtung (1) zur Ermittlung einer ein Fluid und/oder eine Fluidströmung des Fluids betreffenden Fluidgröße, insbesondere eines Durchflussvolumens, als die Messgröße dient und ein Messvolumen (2) zur Aufnahme und/oder zur Führung des Fluids umfasst, wobei der Wellenleiter (29) zumindest einen Abschnitt einer Seitenwand (3) des Fluidvolumens (2) bildet, wobei die Steuereinrichtung (14) dazu eingerichtet ist, das Schwingelement (6) derart anzusteuern, dass es die geführte Welle (8) derart anregt, dass sie bei ihrer Ausbreitung parallel zu der Oberfläche (18) eine weitere Welle (9, 10), insbesondere eine Kompressionswelle, im Fluid anregt, die über das Fluid zurück zu dem Schwingelement (6) oder zu dem weiteren Schwingelement (7) geführt wird, um dieses zu den Schwingungen anzuregen.

8. Messeinrichtung nach Anspruch 6 oder 7, **dadurch gekennzeichnet, dass** mit der Stirnfläche, mit der das Schwingelement (6) gekoppelt ist, wenigstens ein zusätzliches Schwingelement (55) schwingungsgekoppelt ist, wobei die Steuereinrichtung (14) dazu eingerichtet ist, das zusätzliche Schwingelement (55) alternativ zu dem Schwingelement (6) oder gemeinsam mit dem Schwingelement (6) anzusteuern, um modenselektiv die geführte Welle (8) anzuregen.

## Claims

1. Method of mode-selective excitation of a guided wave (8) in a planar waveguide (29), the direction of propagation (28) of said guided wave running parallel to a surface (18) of the waveguide (29) and through an oscillation element (6) which is coupled to the waveguide (29) and excited to oscillate by a control device (14), wherein the oscillation element (14) is oscillation-coupled to an end face (16) of the waveguide (29) which is at an angle of at least 80° or at least 85° with respect to the surface (18) of the waveguide (29), **characterized**
**in that** the oscillation element (6) used comprises a piezoelectric main body (53) and a first and a second electrode (19, 19', 20) arranged on opposite side faces of the main body (53) which extend at an angle of less than 10° or less than 5° with respect to the surface (18) of the waveguide (29),
wherein the main body (53) firstly performs thickness oscillations perpendicular to the side faces carrying the electrodes (19, 19', 20) for the purpose of exciting the guided wave (8), whereby a symmetric oscillation mode of the guided wave (8) is excited in mode-selective fashion, or
wherein the main body (53) secondly performs shear oscillations for the purpose of exciting the guided wave (8), whereby an anti-symmetric oscillation mode of the guided wave (8) is excited in mode-selective fashion.

2. Method according to Claim 1, **characterized in that** use is made of a waveguide (29) formed by a plate, in particular a cuboid plate, which is straight or curved along the surface (18), wherein the thickness of the plate perpendicular to the surface (18) is less than the length and the width of the plate at least by the factor of 5 or 10 or 20 and/or wherein the extent of the oscillation element (6) or of the main body (53) perpendicular to the surface (18) deviates by no more than 25% or by no more than 10% from the thickness of the plate.

3. Method according to Claim 1 or 2, **characterized in that** the oscillation element (6), in particular the main body (53), is adhesively bonded to the end face (16) by way of an adhesive layer (21).

4. Method according to Claim 3, **characterized in that** the adhesive layer (21) has a thickness of between 5 µm and 100 µm perpendicular to the end face (16).

5. Method according to any of the preceding claims, **characterized in that** the excitation frequency for exciting the guided wave (8) is chosen so that precisely two oscillation modes of the guided wave (8) can be excited on account of the dispersion relation of the waveguide (29) and/or **in that** the guided wave (8) is a Lamb wave and/or **in that** the oscillation amplitude of a desired oscillation mode of the guided wave (8) is greater than the oscillation amplitude of a non-desired oscillation mode, excitable at the excitation frequency, at least by the factor of 10 or 20 or 30.

6. Measuring device having a control device (14), a planar waveguide (29) and an oscillation element (6) coupled to the waveguide (29), wherein the control device (14) is configured to drive the oscillation element (6) in such a way that the latter, in mode-selective fashion, excites a guided wave (8) so that the said guided wave propagates parallel to a surface (18) of the waveguide (29) in the waveguide or in the respective waveguide (29), wherein the guided wave (8) or a further wave (9, 10) excited by the guided wave (8) puts the oscillation element (6) or a further oscillation element (7) into oscillation, wherein the control device (14) is configured to acquire measurement data relating to the oscillation of the oscillation element (6) or the further oscillation element (7) and determine a measurement variable on the basis of these measurement data, wherein the oscillation element (6) is oscillation-coupled to an end face (16) of the waveguide (29) which is at an angle of at least 80° or at least 85° with respect to the surface (18) of the waveguide (29), **characterized**
**in that**, firstly, the oscillation element (6), in particular the further oscillation element (7), are formed by a piezoelectric main body (53) and a first and a second electrode (19, 20) arranged on opposite side faces of the main body (53) which extend at an angle of less than 10° or less than 5° with respect to the surface (18) of the waveguide (29), wherein the main body (53) is polarized parallel to the side faces or perpendicular to the side faces, or
**in that**, secondly, the oscillation element (6), in particular the further oscillation element (7), are formed by a piezoelectric main body (53) and electrodes (19, 19', 20) arranged on opposite side faces of the main body (53) which extend at an angle of less than 10° or less than 5° with respect to the surface (18) of the waveguide (29), wherein the main body (53) is polarized perpendicular to the side faces in a first portion (56) and polarized parallel to the side faces in a second portion (57), wherein a separate electrode (19, 19') is arranged on at least one of the side faces in each of the portions (56, 57).

7. Measuring device according to Claim 6, **characterized in that** the measuring device (1) serves to determine a fluid variable, in particular a flow volume, relating to a fluid and/or a fluid flow of the fluid as the measurement variable and comprises a measurement volume (2) for receiving and/or guiding the fluid, wherein the waveguide (29) forms at least one portion of a side wall (3) of the fluid volume (2), wherein the control device (14) is configured to drive the oscillation element (6) in such a way that the latter excites the guided wave (8) so that the said guided wave excites a further wave (9, 10), in particular a compression wave, in the fluid during its propagation parallel to the surface (18), the said further wave being guided back, via the fluid, to the oscillation element (6) or the further oscillation element (7) in order to excite the latter to oscillate.

8. Measuring device according to Claim 6 or 7, **characterized in that** at least one additional oscillation element (55) is oscillation-coupled to the end face to which the oscillation element (6) is coupled, wherein the control device (14) is configured to drive the additional oscillation element (55) as an alternative to the oscillation element (6) or jointly with the oscillation element (6) in order to excite the guided wave (8) in mode-selective fashion.

## Revendications

1. Procédé de génération, de manière sélective en termes de mode, d'une onde guidée (8) dans un guide d'ondes (29) en forme de plaque, onde dont la direction de propagation (28) s'étend parallèlement à une surface (18) du guide d'ondes (29), par le biais d'un élément vibrant (6) qui est couplé au guide d'onde (29) et qui est excité par un dispositif de commande (14) afin de générer des vibrations, l'élément vibrant (14) étant couplé en vibration à une surface frontale (16) du guide d'ondes (29) qui fait un angle d'au moins 80° ou d'au moins 85° par rapport à la surface (18) du guide d'ondes (29), **caractérisé en ce que**
l'élément vibrant (6) utilisé comprend un corps de base piézoélectrique (53) et une première et une deuxième électrode (19, 19', 20) qui sont disposées sur des surfaces latérales opposées du corps de base (53) qui forment un angle de moins de 10° ou de moins de 5° par rapport à la surface (18) du guide d'onde (29),
le corps de base (53) effectuant d'une part des oscillations d'épaisseur perpendiculaires aux surfaces latérales portant les électrodes (19, 19', 20) afin de générer l'onde guidée (8), ce qui génère, de manière sélective en termes de mode, un mode de vibration symétrique de l'onde guidée (8), ou
le corps de base (53) effectuant d'autre part des vibrations de cisaillement afin de générer l'onde guidée (8), ce qui génère, de manière sélective en termes de mode, un mode de vibration antisymétrique de l'onde guidée (8).

2. Procédé selon la revendication 1, **caractérisé en ce qu'**un guide d'onde (29) est utilisé qui est formé par une plaque rectiligne ou une plaque incurvée, notamment parallélépipédique, le long de la surface (18), l'épaisseur de la plaque perpendiculairement à la surface (18) étant inférieure d'au moins d'un facteur 5 ou 10 ou 20 à la longueur et à la largeur de la plaque et/ou l'étendue de l'élément vibrant (6) ou du corps de base (53) perpendiculairement à la surface (18) s'écartant de 25 % maximum ou de 10 % maximum de l'épaisseur de la plaque.

3. Procédé selon la revendication 1 ou 2, **caractérisé en ce que** l'élément vibrant (6), notamment le corps de base (53), est collé sur la surface frontale (16) par le biais d'une couche adhésive (21).

4. Procédé selon la revendication 3, **caractérisé en ce que** la couche adhésive (21) a une épaisseur comprise entre 5 µm et 100 µm perpendiculairement à la surface frontale (16).

5. Procédé selon l'une des revendications précédentes, **caractérisé en ce que** la fréquence d'excitation destinée à générer l'onde guidée (8) est choisie de manière à ce qu'exactement deux modes de vibration de l'onde guidée (8) peuvent être générés en raison de la relation de dispersion du guide d'ondes (29) et/ou **en ce que** l'onde guidée (8) est une onde de Lamb et/ou **en ce que** l'amplitude de vibration d'un mode de vibration souhaité de l'onde guidée (8) est supérieure d'au moins un facteur 10 ou 20 ou 30 à l'amplitude de vibration d'un mode de vibration indésirable qui peut être généré à la fréquence d'excitation.

6. Dispositif de mesure comprenant un dispositif de commande (14), un guide d'onde (29) en forme de plaque et un élément vibrant (6) couplé au guide d'onde (29), le dispositif de commande (14) étant conçu pour commander l'élément vibrant (6) de manière à ce qu'il génère, de manière sélective en termes de mode, une onde guidée (8) de sorte qu'elle se prpage dans le guide d'onde ou le guide d'onde respectif (29) parallèlement à une surface (18) du guide d'ondes (29), l'onde guidé (8) ou une autre onde (9, 10) générée par l'onde guidée (8) faisant vibrer l'élément vibrant (6) ou un autre élément vibrant (7), le dispositif de commande (14) étant conçu pour acquérir des données de mesure relatives à la vibration de l'élément vibrant (6) ou de l'autre élément vibrant (7) et pour déterminer une grandeur de mesure en fonction de ces données de mesure, l'élément vibrant (6) étant couplé en vibration à une surface frontale (16) du guide d'ondes (29) qui forme un angle d'au moins 80° ou d'au moins 85° par rapport à la surface (18) du guide d'ondes (29), **caractérisé en ce que**
d'une part l'élément vibrant (6), en particulier l'autre élément vibrant (7), est formé par un corps de base piézoélectrique (53) et une première et une deuxième électrode (19, 20) qui sont disposées sur des surfaces latérales opposées du corps de base (53) qui forment un angle inférieur à 10° ou inférieur à 5° par rapport à la surface (18) du guide d'ondes (29), le corps de base (53) étant polarisé parallèlement aux surfaces latérales ou perpendiculairement aux surfaces latérales, ou
d'autre part l'élément vibrant (6), en particulier l'autre élément vibrant (7), sont formés par un corps de base piézoélectrique (53) et des électrodes (19, 19', 20) qui sont disposées sur des surfaces latérales opposées du corps de base (53) qui forment un angle inférieur à 10° ou inférieur à 5° par rapport à la surface (18) du guide d'ondes (29),
le corps de base (53) étant polarisé perpendiculairement aux surfaces latérales dans une première portion (56) et parallèlement aux surfaces latérales dans une deuxième portion (57), une électrode séparée (19, 19') étant disposée sur au moins une des surfaces latérales dans chacune des portions (56, 57).

7. Dispositif de mesure selon la revendication 6, **caractérisé en ce que** le dispositif de mesure (1) est utilisé comme grandeur de mesure pour déterminer une grandeur fluidique relative à un fluide et/ou un écoulement du fluide, notamment un débit volumique, et comprend un volume de mesure (2) destiné à recevoir et/ou guider le fluide, le guide d'ondes (29) formant au moins une portion d'une paroi latérale (3) du volume de fluide (2), le dispositif de commande (14) étant conçu pour commander l'élément vibrant (6) de manière à ce qu'il génère l'onde guidée (8) de manière à qu'il génère dans le fluide une autre onde (9, 10) lors de sa propagation parallèlement à la surface (18), en particulier une onde de compression, qui est renvoyée par le biais du fluide à l'élément vibrant (6) ou à l'autre élément vibrant (7) pour exciter celui-ci afin de générer des vibrations.

8. Dispositif de mesure selon la revendication 6 ou 7, **caractérisé en ce qu'**au moins un élément vibrant supplémentaire (55) est couplé en vibration à la surface frontale à laquelle l'élément vibrant (6) est couplé, le dispositif de commande (14) étant conçu pour commander l'élément vibrant supplémentaire (55) alternativement à l'élément vibrant (6) ou conjointement avec l'élément vibrant (6) afin de générer, de manière sélective en termes de mode, l'onde guidée (8).
